# EUROPEAN PATENT SPECIFICATION

(11) **EP 4 188 713 B1**
(45) Date of publication and mention of the grant of the patent: **03.09.2025**
(21) Application number: 21849053.0
(22) Date of filing: 11.07.2021
(51) Int. Cl.: B41J 2/165, C09D 11/54, C09D 11/38, C04B 41/49, B41J 3/407, C09D 11/322, B41J 2/01, C09D 11/107

(54) **INKJET INK FORMULATIONS AND USES THEREOF**
TINTENSTRAHLTINTENFORMULIERUNGEN UND VERWENDUNGEN DAVON
FORMULATIONS D'ENCRE POUR JET D'ENCRE ET LEURS UTILISATIONS

(30) Priority: 29.07.2020 US 202063058295 P
(43) Date of publication of application: 07.06.2023
(73) Proprietor: Landa Corporation Ltd., 7612301 Rehovot (IL)
(72) Inventor: LEVANON, Moshe, 7608606 Rehovot (IL); SHIMONY-COHEN, Tal, 7402107 Nes Ziona (IL); ITZHAKOV, Stella, 7085642 Gan Yavne (IL); OHAYON NAOR, Efrat, 7764374 Ashdod (IL)
(74) Representative: Kurig, Thomas
(86) International application number: PCT/IL2021/050846
(87) International publication number: WO 2022/024106

(56) References cited:
- JP-B2- 4 562 388
- US-A- 5 780 412
- US-A1- 2011 069 110
- US-A1- 2011 069 117
- US-A1- 2011 069 118
- US-A1- 2013 182 045
- US-A1- 2014 026 783
- ANONYMOUS: "Technical Data Sheet XIAMETER™ OFS-0777 Siliconate", DOW INC., 31 December 2017 (2017-12-31), XP055904441, Retrieved from the Internet <URL:https://www.dow.com/en-us/document-viewer.html?ramdomVar=6236427586842315077&docPath=/content/dam/dcc/documents/en-us/productdatasheet/95/95-4/95-435-01-xiameter-ofs-0777-siliconate.pdf> [retrieved on 20220323]

## Description

### TECHNOLOGICAL FIELD

The present disclosure relates to inkjet ink formulations and their use in preventing or minimizing print heads deterioration.

### BACKGROUND ART

Printing systems utilize print head plates to inject inks onto a substrate. The print head plates may be subjected to damages due to continuous use sometimes under vigorous operation conditions such as high frequency of ink ejection, high pressure, and temperature.

At times, the content of the inkjet ink alone or together with the operation conditions may cause deterioration of the print head e.g., damage to the structure and/or the chemical nature of the print heads.

Additives such as silicic acid, inorganic silicate or colloidal silica are used in inkjet ink compositions to suppress deterioration of print head plates **[1]-[5].**

### REFERENCES

[1] US 8,419,164.
[2] US 8,662,638.
[3] US 8,425,005.
[4] US 8,657,428.
[5] US 8,430,493.

The following patent applications/publications to the Applicant provide potentially relevant material:
[6] WO 2013/132439 (PCT/IB2013/51755).
[7] WO 2015/036865 (PCT/IB2014/02395).
[8] WO 2017/208152 (PCT/IB2017/053177).
[9] WO 2013/132418 (PCT/IB2013/051716).
[10] WO 2019/012456 (PCT/IB2018/055126).
[11] WO 2020/003088 (PCT/IB2019/055288).
[12] WO 2013/132420 (PCT/IB2013/051718).
[13] WO 2015/036906 (PCT/IB2014/064277).
[14] WO 2020/136517 (PCT/IB2019/061081).

Acknowledgement of the above references herein is not to be inferred as meaning that these are in any way relevant to the patentability of the presently disclosed subject matter.

### SUMMARY OF THE INVENTION

The inventors of the present invention have developed water-based inkjet ink formulations which comprise at least one water soluble alkali-metal organosiliconate. The inventors have surprisingly found that presence of the alkali-metal organosiliconate compound in the water-based inkjet ink formulations of the present invention provided prolonged protection of the print head used in the printing process without causing reduction in the printing quality and without affecting the jetting characteristics. Further, the inventors have found that utilizing inorganic silicates (which are known in their ability to suppress deterioration of printing head plates) instead of alkali-metal organosiliconates in the ink formulation, at concentrations similar to those used with the alkali-metal organosiliconates, was not sufficient to suppresses the deterioration of the print head plate, in particular, when used with white pigments such as Titanium Dioxide (TiO₂).

The suppression of the deterioration of the print head plate by the inkjet ink compositions of the present invention was illustrated with both white and color pigments, thus enabling printing with a great variety of colors and on various printing substrates such as plastic (e.g., widely used with white pigments), fibrous substrates (e.g., coated and/or uncoated) and various intermediate transfer members (the latter are used with indirect printing methods e.g. as detailed herein below).

Thus, according to one of its aspects the present invention provides water-based inkjet ink formulation comprising:
(a) a solvent containing water;
(b) at least one coloring agent;
(c) at least one alkali-metal organosiliconate of Formula (I) 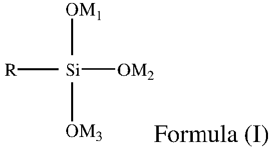 wherein:
   R is C₁-C₅ alkyl group;
   M₁, M₂, and M₃ are each, independently of the other, selected from hydrogen or a cation of an alkali metal, wherein at least one of said M₁, M₂ and M₃ is a cation of an alkali metal; and
   optionally
(d) at least one binder (e.g., organic polymeric resin).

In another one of its aspects the present invention provides water-based inkjet ink formulation comprising:
(a) a solvent containing water;
(b) at least one coloring agent; and
(c) at least one alkali-metal organosiliconate of Formula (I) 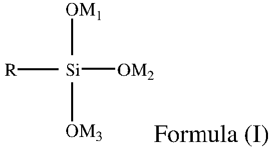 wherein:
   R is C₁-C₅ alkyl group;
   M₁, M₂, and M₃ are each, independently of the other, selected from hydrogen or a cation of an alkali metal, wherein at least one of said M₁, M₂ and M₃ is a cation of an alkali metal.

In some embodiments, e.g., when the water-based inkjet ink formulation is used in an indirect printing process or system, the water-based inkjet ink formulation may further comprise at least one binder (e.g., organic polymeric resin).

In a further one of its aspects the present invention provides a method for preventing or minimizing print head deterioration, (e.g., the print head being used in an inkjet printing process and forms part of a printing system), said method comprising utilizing (e.g., in the printing process) a water-based inkjet ink formulation, wherein said formulation comprises at least one alkali-metal organosiliconate of Formula (I) 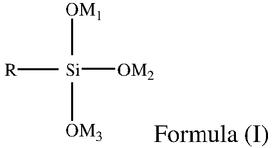 wherein:
R is C₁-C₅ alkyl group;
M₁, M₂, and M₃ are each, independently of the other, selected from hydrogen, or a cation of an alkali metal, wherein at least one of said M₁, M₂ and M₃ is a cation of an alkali metal, to thereby prevent or minimize print head deterioration, and wherein the water-based inkjet ink formulation further comprises a solvent containing water, at least one coloring agent and optionally at least one binder (e.g., organic polymeric resin).

In yet a further one of its aspects the present invention provides a method for preventing or minimizing print head deterioration, (e.g., the print head being used in an inkjet printing process and forms part of a printing system), said method comprising utilizing (e.g., in the printing process) a water-based inkjet ink formulation, wherein said formulation comprises at least one alkali-metal organosiliconate of Formula (I) 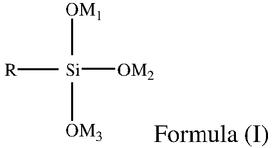 wherein:
R is C₁-C₅ alkyl group;
M₁, M₂, and M₃ are each, independently of the other, selected from hydrogen, or a cation of an alkali metal, wherein at least one of said M₁, M₂ and M₃ is a cation of an alkali metal, to thereby prevent or minimize print head deterioration, and wherein the water-based inkjet ink formulation further comprises a solvent containing water and at least one coloring agent.

In some embodiments, e.g., when the water-based inkjet ink formulation is used in an indirect printing process or system, the water-based inkjet ink formulation utilized in the method for preventing or minimizing print head deterioration may further comprise at least one binder (e.g., organic polymeric resin).

In yet another one of its aspects the present invention provides a method for preventing or minimizing print head deterioration, (e.g., the print head being used in an inkjet printing process and forms part of a printing system) utilizing a water-based inkjet ink formulation which comprises a solvent containing water, at least one coloring agent and optionally at least one binder, the method comprising adding to said water-based inkjet ink formulation a sufficient amount of at least one alkali-metal organosiliconate of Formula (I) 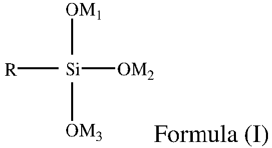 wherein:
R is C₁-C₅ alkyl group;
M₁, M₂, and M₃ are each, independently of the other, selected from hydrogen, or a cation of an alkali metal, wherein at least one of said M₁, M₂ and M₃ is a cation of an alkali metal, to thereby prevent or minimize print head deterioration.

In a further one of its aspects the present invention provides a method for preventing or minimizing print head deterioration (e.g., the print head being used in an inkjet printing process and forms part of a printing system), wherein the method comprises utilizing (e.g., in the printing process) the water-based inkjet ink formulation as herein disclosed.

In a further one of its aspects the present invention provides a water-based inkjet ink formulation as herein disclosed, for use in a method for preventing or minimizing print head deterioration.

In yet a further one of its aspects the present invention provides a water-based inkjet ink formulation as herein disclosed, for use in preventing or minimizing print head deterioration.

Yet, in a further one of its aspects the present invention provides a water-based inkjet ink formulation comprising at least one alkali-metal organosiliconate of Formula (I) as herein disclosed, for use in preventing or minimizing print head deterioration.

In yet a further one of its aspects the present invention provides a water-based inkjet ink formulation comprising at least one alkali-metal organosiliconate of Formula (I) as herein disclosed, for use in a method of preventing or minimizing print head deterioration.

In yet another one of its aspects the present invention provides a water-based inkjet ink formulation as herein disclosed, for use in a printing process e.g., as herein described.

In yet another one of its aspects the present invention provides a water-based inkjet ink formulation as herein disclosed, said formulation forming part of a printing system e.g., as herein described.

In a further one of its aspects the present invention provides a printing method utilizing the water-based inkjet ink formulation as herein disclosed.

In yet a further one of its aspects the present invention provides a printing system comprising the water-based inkjet ink formulation as herein disclosed.

In a further one of its aspects the present invention provides a printing system comprising an image forming station comprising one or more print bars, each of which is configured to hold an ink formulation and comprises one or more print heads, each of said one or more print heads is configured to jet said ink formulation onto a printing substrate to form ink images on said substrate, wherein at least one of said one or more print bars is configured to hold the water-based inkjet ink formulation according to the present invention.

Yet, in a further one of its aspects the present invention provides a printing system comprising:
an intermediate transfer member comprising a release layer surface;
an image forming station comprising one or more print bars, each of which is configured to hold an ink formulation and comprises one or more print heads, each of said one or more print heads is configured to jet said ink formulation onto said release layer surface to form ink images thereon, wherein at least one of said one or more print bars is configured to hold the water-based inkjet ink formulation according to the present invention; and
a transfer station for transferring the ink images from the intermediate transfer member to a printing substrate.

Yet, in a further one of its aspects the present invention provides a printing system and a printing process substantially as herein described.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Figure 1** is a schematic side view of a printing system (e.g., digital printing system), according to some embodiments of the invention.
**Figure 2** displays a scanning electron microscope (SEM) image, top view, of a coupon simulating a nozzle plate, according to some embodiments of the invention.
**Figure 3** displays a schematic illustration of a side view of a coupon simulating a silicon made nozzle plate, according to some embodiments of the invention.
**Figure 4A-4G** display SEM images, top view, of a coupon simulating a nozzle plate, treated with inkjet ink formulations comprising a white colorant.
**Figures 5A-5C** display SEM images, top view, of a coupon simulating a nozzle plate, treated with inkjet ink formulations comprising a magenta colorant.

### DETAILED DESCRIPTION OF THE INVENTION

The present invention is based on a novel concept of utilizing alkali-metal organosiliconates in aqueous inkjet ink formulations to suppress deterioration of print heads which form part of a printing system.

The alkali-metal organosiliconates assist in improving the lifetime of the print heads used with the ink formulations in a printing process, the printing process may be direct or indirect.

The improvement of the lifetime of the print heads is directly associated with the ability of the inkjet ink compositions of the present invention to suppress the deterioration of the print heads. Non limiting example is the ability to suppress the deterioration of the print head repellent property, for example a silicon made prints head which surface thereof is coated with a liquid repellent film comprising a fluoroalkylsilane moiety.

Without wishing to be bound by theory, the inventors of the present invention believe that the alkali-metal organosiliconates may provide the ink formulation with the ability to protect the surface of the print heads against chemical damage.

Thus, the present invention provides in one of its aspects a water-based inkjet ink formulation comprising:
(a) a solvent containing water;
(b) at least one coloring agent; and
(c) at least one alkali-metal organosiliconate of Formula (I) 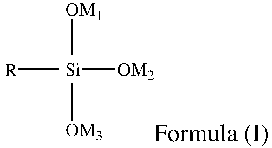 wherein:
   R is C₁-C₅ alkyl group;
   M₁, M₂, and M₃ are each, independently of the other, selected from hydrogen or a cation of an alkali metal, wherein at least one of said M₁, M₂ and M₃ is a cation of an alkali metal.

Various embodiments will be detailed herein in connection with the aforementioned aspect. It is noted that one or more embodiments which are detailed in connection with the water-based inkjet ink formulation of the invention are also applicable *mutatis mutandis* to other aspects of the invention e.g., methods, processes, uses and systems.

In some embodiments the water-based inkjet ink formulation of the invention may further comprise at least one binder (e.g., organic polymeric resin).

In some embodiments the inkjet ink formulation comprises:
(a) a solvent containing water;
(b) at least one coloring agent;
(c) at least one alkali-metal organosiliconate of Formula (I) 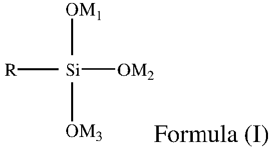 wherein:
   R is C₁-C₅ alkyl group;
   M₁, M₂, and M₃ are each, independently of the other, selected from hydrogen or a cation of an alkali metal, wherein at least one of said M₁, M₂ and M₃ is a cation of an alkali metal; and
   optionally
(d) at least one binder (e.g., organic polymeric resin).

The inkjet ink formulations according to the present invention are configured for use in preventing or minimizing print head deterioration, e.g., the print head being used in an inkjet printing process and forms part of a printing system.

The invention further provides a method of preventing or minimizing print head deterioration as herein disclosed.

The alkali-metal organosiliconates of the present invention may be obtained according to procedures known in the art.

In some embodiments the alkali-metal organosiliconates of the present invention are available from Wacker Silicones, Dow Chemical and Gelest.

As used herein, the group "***C₁-C₅ alkyl***" is an alkyl group containing between 1 and 5 carbon atoms, 1 and 5 atoms inclusive, which may be linear or branched and/or may be substituted at any position. In some embodiments, the number of carbon atoms in the alkyl chain may be selected from 1 to 2, 1 to 3, 1 to 4 or 1 to 5. Thus, a group designated as C₁-C₅ alkyl would comprise 1, 2, 3, 4, or 5 carbon atoms.

Examples of alky groups include, but are not limited to, methyl, ethyl, n-propyl, isopropyl, n-butyl, isobutyl, tert-butyl and n-pentyl.

As used herein the term "***substituted***" in connection with "***C₁-C₅ alkyl***" is a hydrocarbon group which contains one or more heteroatoms such as oxygen (e.g., OH), nitrogen (e.g., NH₂), sulfur, phosphorous, halogen (e.g., F, Cl, Br or I). The presence of the heteroatom may assist in solubilizing the alkali-metal organosiliconate in the aqueous inkjet formulation e.g., when the alkyl group is of 3 to 5 carbon atoms or 4 to 5 carbon atoms.

In some embodiments according to the present invention, R is a linear or branched C₁-C₅ alkyl group.

In some embodiments according to the present invention, R is a substituted or unsubstituted C₁-C₅ alkyl group.

In some embodiments according to the present invention, R is a substituted C₁-C₅ alkyl group.

In some embodiments according to the present invention, R is a substituted C₁-C₅ alkyl group and wherein the substituting group is a polar group selected to improve the solubility in water of the alkali-metal organosiliconate.

In some embodiments according to the present invention, the polar substituting group is hydroxyl group.

In some embodiments according to the present invention, R is C₁-C₃ alkyl group.

In some embodiments according to the present invention, R is selected from methyl, ethyl, propyl or isopropyl.

In some embodiments according to the present invention, R is methyl.

In some embodiments according to the present invention, R is ethyl.

In some embodiments according to the present invention, R is propyl.

In some embodiments according to the present invention, R is isopropyl.

As used herein the term "***alkali metal***" refers to any one of the chemical elements lithium (Li), sodium (Na), potassium (K), rubidium (Rb), caesium (Cs), and francium (Fr).

In the alkali-metal organosiliconates of the present invention at least one of the group O is negatively charged (i.e., it is anionic) and is charge balanced by an alkali-metal cation e.g., Li⁺, Na⁺, K⁺, Rb⁺, Cs⁺ or Fr⁺.

In some embodiments according to the present invention, two O groups in the alkali-metal organosiliconate are negatively charged and are charge balanced by an alkali-metal cation e.g., Li⁺, Na⁺, K⁺, Rb⁺, Cs⁺ or Fr⁺ which may be same or different.

In some embodiments according to the present invention, three O groups in the alkali-metal organosiliconate are negatively charged and are charge balanced by an alkali-metal cation e.g., Li⁺, Na⁺, K⁺, Rb⁺, Cs⁺ or Fr⁺ which may be same or different.

In some embodiments according to the present invention, three O groups in the alkali-metal organosiliconate are negatively charged and are charge balanced by an alkali-metal cation e.g., Li⁺, Na⁺, K⁺, Rb⁺, Cs⁺ or Fr⁺ which is the same alkali-metal cation.

In some embodiments according to the present invention, the charge balance of one or more O groups of the alkali-metal organosiliconates according to the invention may be by Li⁺.

In some embodiments according to the present invention, the charge balance of one or more O groups of the alkali-metal organosiliconates according to the invention may be by Na⁺.

In some embodiments according to the present invention, the charge balance of one or more O groups of the alkali-metal organosiliconates according to the invention may be by K⁺.

In some embodiments according to the present invention, the charge balance of one or more O groups of the alkali-metal organosiliconates according to the invention may be by Rb⁺.

In some embodiments according to the present invention, the charge balance of one or more O groups of the alkali-metal organosiliconates according to the invention may be by Cs⁺.

In some embodiments according to the present invention, in the alkali-metal organosiliconate of the invention, when M₁, M₂, and M₃ are independently of the other different from hydrogen, the bond between the oxygen atom and the M₁, M₂, and M₃ is an ionic bond.

In some embodiments according to the present invention, two of the M₁, M₂, and M₃ in the alkali-metal organosiliconate are hydrogen and the third is a cation of an alkali metal.

In some embodiments according to the present invention, the cation of an alkali metal is selected from Li⁺, Na⁺, K⁺, Rb⁺, Cs⁺ or any combination thereof.

In some embodiments according to the present invention, the cation of an alkali metal is selected from Li⁺, Na⁺, K⁺ or any combination thereof.

In some embodiments according to the present invention, the cation of an alkali metal is Na⁺.

In some embodiments according to the present invention, the cation of an alkali metal is K⁺.

In some embodiments according to the present invention, the cation of an alkali metal is Li⁺.

In some embodiments according to the present invention, the at least one alkali-metal organosiliconate is selected from the group consisting of:

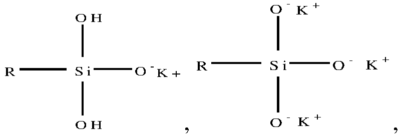

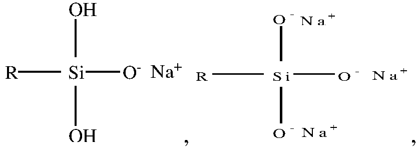

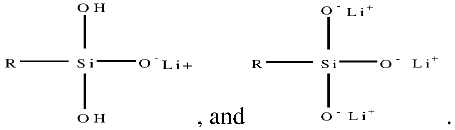

In some embodiments according to the present invention, R is methyl and the at least one alkali-metal organosiliconate is selected from the group consisting of:

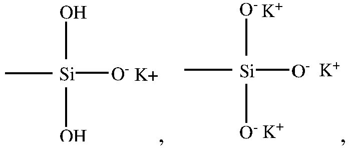

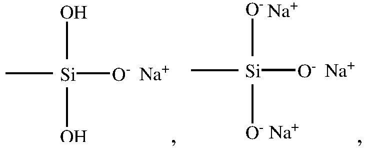

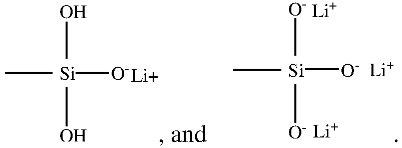

In some embodiments according to the present invention, the at least one alkali-metal organosiliconate is selected from the group consisting of:

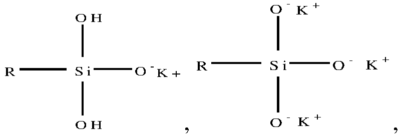

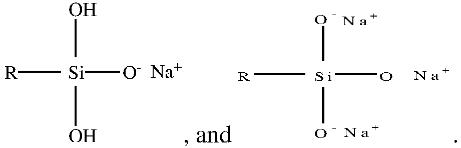

In some embodiments according to the present invention, R is methyl and the at least one alkali-metal organosiliconate is selected from the group consisting of:

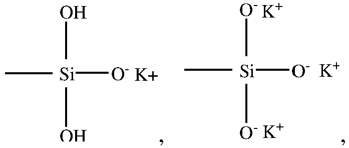

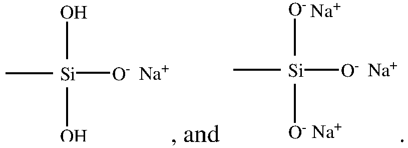

In some embodiments according to the present invention, the at least one alkali-metal organosiliconate is selected from the group consisting of:

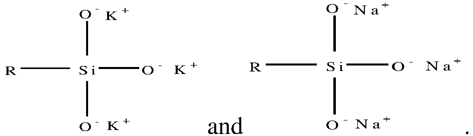

In some embodiments according to the present invention, R is methyl and the at least one alkali-metal organosiliconate is selected from the group consisting of:

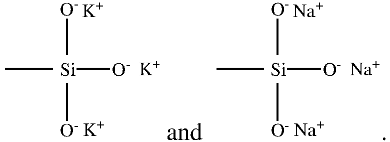

In some embodiments according to the present invention the alkali-metal organosiliconate is selected from the group consisting of: 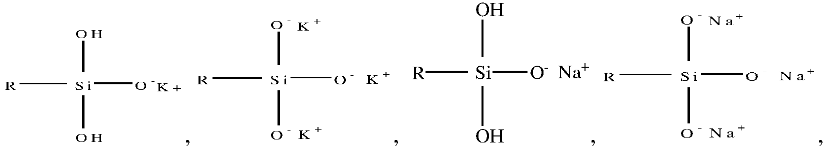 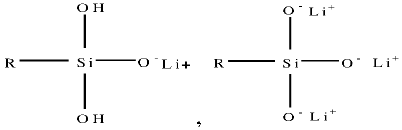 and any combination thereof.

In some embodiments according to the present invention, R is methyl and the alkali-metal organosiliconate is selected from the group consisting of: 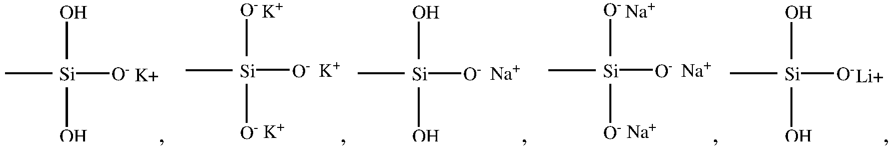 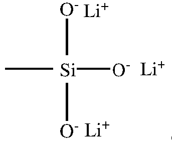 and any combination thereof.

In some embodiments according to the present invention the alkali-metal organosiliconate is selected from the group consisting of: 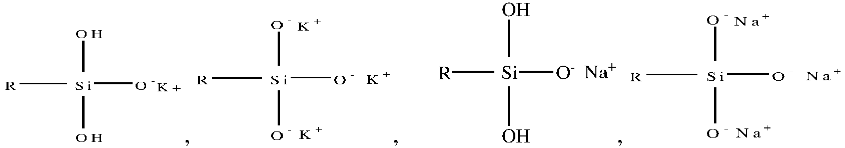 and any combination thereof.

In some embodiments according to the present invention, R is methyl and the alkali-metal organosiliconate is selected from the group consisting of: 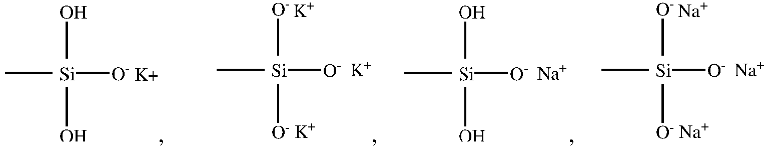 and any combination thereof.

In some embodiments according to the present invention the alkali-metal organosiliconate is selected from the group consisting of: 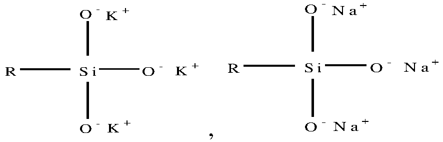 and a combination thereof.

In some embodiments according to the present invention, R is methyl and the alkali-metal organosiliconate is selected from the group consisting of: 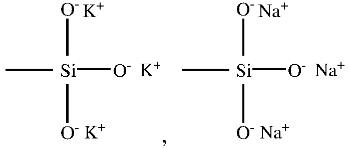 and a combination thereof.

In some embodiments according to the present invention the alkali-metal organosiliconate is selected from the group consisting of: 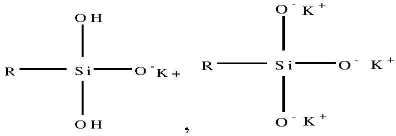 and a combination thereof.

In some embodiments according to the present invention the alkali-metal organosiliconate is selected from the group consisting of: 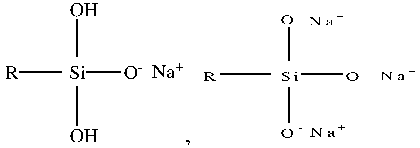 and a combination thereof.

In some embodiments according to the present invention, R is methyl and the alkali-metal organosiliconate is selected from the group consisting of: 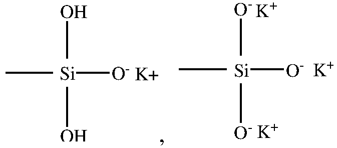 and a combination thereof.

In some embodiments according to the present invention, R is methyl and the alkali-metal organosiliconate is selected from the group consisting of: 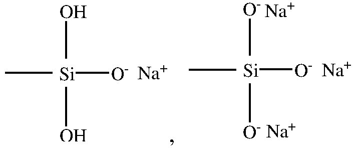 and a combination thereof.

In some embodiments according to the present invention, the at least one alkali-metal organosiliconate is

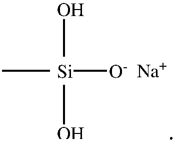

In some embodiments according to the present invention, the at least one alkali-metal organosiliconate is

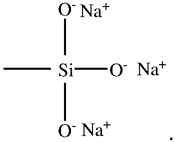

In some embodiments according to the present invention, the at least one alkali-metal organosiliconate is sodium methylsiliconate which at times may be referred to as methyl-silanetriosodiumsalt or sodium methylsilanetriolate.

In some embodiments according to the present invention, the at least one alkali-metal organosiliconate is sodium methylsiliconate being of CAS No. of 16589-43-8.

In some embodiments according to the present invention, the at least one alkali-metal organosiliconate is sodium methylsiliconate being of the chemical formula CH₅NaO₃Si.

In some embodiments according to the present invention, the at least one alkali-metal organosiliconate is sodium methylsiliconate being of the chemical formula CH₃Na₃O₃Si.

In some embodiments according to the present invention, the at least one alkali-metal organosiliconate is

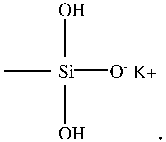

In some embodiments according to the present invention, the at least one alkali-metal organosiliconate is

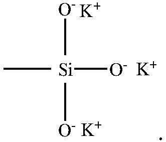

In some embodiments according to the present invention, the at least one alkali-metal organosiliconate is potassium methyl siliconate which at times may be referred to as methylsilanetriol potassiumsalt or potassium methylsilanetriolate.

In some embodiments according to the present invention, the at least one alkali-metal organosiliconate is potassium methyl siliconate being of CAS No. of 31795-24-1.

In some embodiments according to the present invention, the at least one alkali-metal organosiliconate is potassium methyl siliconate being of the chemical formula CH₅KO₃Si.

In some embodiments according to the present invention, the at least one alkali-metal organosiliconate is potassium methyl siliconate being of the chemical formula CH₃K₃O₃Si.

In some embodiments the water-based inkjet ink formulation according to the present invention is devoid of one or more inorganic silicate.

In some embodiments the water-based inkjet ink formulation according to the present invention may further comprise one or more inorganic silicate.

In some embodiments the water-based inkjet ink formulation according to the present invention may further comprise one or more inorganic silicate as dispersant/s.

In some embodiments the water-based inkjet ink formulation according to the present invention may further comprise one or more inorganic silicate which may prevent or minimize print head deterioration e.g., wherein the ink formulation comprises a colored ink. To this end, the effect of the one or more inorganic silicate and the at least one alkali-metal organosiliconate of the present invention may provide an additive effect. At times, the effect may be synergistic.

In some embodiments the water-based inkjet ink formulation according to the present invention is devoid of colloidal silica.

In some embodiments the water-based inkjet ink formulation according to the present invention may further comprise one or more colloidal silica.

In some embodiments the one or more colloidal silica may prevent or minimize print head deterioration e.g., wherein the ink formulation comprises a colored ink. To this end, the effect of the one or more colloidal silica and the at least one alkali-metal organosiliconate of the present invention may provide an additive effect. At times, the effect may be synergistic.

As used herein above and below the term "***about***" refers to ± 10% of the indicated value.

In some embodiments, the at least one alkali-metal organosiliconate is present in the water-based inkjet ink formulation according to the present invention at a concentration of at least about 0.01 w/w %, at times of at least about 0.05 w/w %, even at times of at least about 0.1 w/w %.

In some embodiments, the at least one alkali-metal organosiliconate is present in the water-based inkjet ink formulation according to the present invention at a concentration of at least about 0.1 w/w %.

In some embodiments, the at least one alkali-metal organosiliconate is present in the water-based inkjet ink formulation according to the present invention at a concentration of about 0.1 w/w %.

In some embodiments, the at least one alkali-metal organosiliconate is present in the water-based inkjet ink formulation according to the present invention at a concentration of between about 0.01 w/w % to about 1.0 w/w %, 0.01 and 1.0 w/w % inclusive. Any value within the above concentration range is within the scope of the present invention e.g., 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00 w/w %.

In some embodiments, the at least one alkali-metal organosiliconate is present in the water-based inkjet ink formulation according to the present invention at a concentration of between about 0.05 w/w % to about 0.5 w/w %, 0.05 w/w % and 0.5 w/w % inclusive. Any value within the above concentration range is within the scope of the present invention e.g., 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50 w/w %.

In some embodiments, the at least one alkali-metal organosiliconate is present in the water-based inkjet ink formulation according to the present invention at a concentration of between about 0.1 w/w % to about 0.5 w/w %, 0.1 w/w % and 0.5 w/w % inclusive. Any value within the above concentration range is within the scope of the present invention e.g., 0.10. 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50 w/w %. At times, the at least one alkali-metal organosiliconate is present in the water-based inkjet ink formulation according to the present invention at a concentration of about 0.15, 0.20, 0.25, 0.30, 0.35, 0.40 or 0.45 w/w %.

Unless otherwise stated, a "***concentration***" refers to a **w/w** - i.e., a weight of a component of the water-based inkjet ink formulation per total weight of the formulation.

The alkali-metal organosiliconates according to the present invention may be added to or may form part of inkjet ink formulations known in the art. Non-limiting examples of ink formulations which may be used in the present invention are ink formulations disclosed in patent publications to the Applicant WO 2013/132439 (PCT/IB2013/51755) **[6],** WO 2015/036865 (PCT/IB2014/02395) **[7],** WO2017/208152 (PCT/IB2017/053177) **[8].**

The water-based inkjet ink formulation of the present invention are aqueous inks. In some embodiments the water constitutes at least about 30 w/w % of the formulation, at times about 50 w/w % or more.

In some embodiments according to the present invention, the water constitutes between about 30 w/w % to about 65 w/w %, 30 w/w % and 65 w/w % inclusive. Any value within the above concentration range is within the scope of the present invention e.g., 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64 and 65 w/w %.

In some embodiments the water-based inkjet ink formulation of the present invention may further comprise at least one co-solvent.

In some embodiments the water-based inkjet ink formulation of the present invention may optionally further comprise one or more water-miscible co-solvents.

In some embodiments according to the present invention, the water-based ink formulation may further comprise at least one binder.

In some embodiments the at least one binder may be dispersed or at least partly dissolved in the water and optional co-solvent.

In some embodiments the at least one binder is dispersed or at least partly dissolved in the water and optional co-solvent.

In some embodiments the at least one binder is an organic polymeric resin binder.

In some embodiments the at least one binder is an organic polymeric resin binder, dispersed or at least partly dissolved in the water and optional co-solvent.

In some embodiments according to the present invention, the at least one binder in the ink formulation is an anionic binder e.g., an acrylic binder and/or a sulfonic binder. Similar anionic binders are within the scope of the present invention.

In some embodiments according to the present invention, the at least one binder in the ink formulation is a negatively charged organic polymeric resin.

In some embodiments according to the present invention, the average molecular weight of the negatively charged organic polymeric resin is at least 8,000.

In some embodiments according to the present invention, the at least one binder in the ink formulation is an acrylic polymer and/or an acrylic-styrene co-polymer (e.g., with an average molecular weight around 60,000 g/mole).

In some embodiments according to the present invention, the at least one binder is present in the water-based inkjet ink formulation according to the present invention at a concentration of between about 5.0 w/w % to about 15.0 w/w %, 5.0 w/w % and 15.0 w/w % inclusive. Any value within the above concentration range is within the scope of the present invention e.g., 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0 w/w %.

In some embodiments according to the present invention, the at least one binder is present in the water-based inkjet ink formulation according to the present invention at a concentration of between about 6.0 w/w % to about 12.0 w/w %, 6.0 w/w % and 12.0 w/w % inclusive. Any value within the above concentration range is within the scope of the present invention e.g., 6.0, 6.5, 7.0, 7.5, 8.0, 8.5, 9.0, 9.5, 10.0, 10.5, 11.0, 11.5, 12.0 w/w %.

In some embodiments according to the present invention, the water-based ink formulation may further comprise at least one binder and is used in indirect printing process. To this end, the at least one binder is present in the water-based inkjet ink formulation according to the present invention at a concentration of between about 5.0 w/w % to about 15.0 w/w % (at times between about 6.0 w/w % to about 12.0 w/w %), 5.0 w/w % and 15.0 w/w % inclusive. Any value within the above concentration range is within the scope of the present invention e.g., 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0 w/w %.

Non limiting examples of binders include polystyrene-acrylate co-polymers, polyacrylate polymers, polyurethanes (e.g., aliphatic polyurethanes such as anionic aliphatic polyurethanes), urethane-acrylate co-polymers, and polyesters (e.g., a polyethylene terephthalate).

Exemplary styrene-acrylic (or polystyrene-acrylate) copolymers include Joncryl^{®} 77E, Joncryl^{®} 586, Joncryl^{®} 90, Joncryl^{®} 8085, and Joncryl^{®} ECO 2177.

Exemplary polyurethane includes NeoRez^{®} R-563, an anionic aliphatic polyurethane from DSM-PUD.

Exemplary acrylic or polyacrylic binders include Joncryl^{®} 538 an acrylic polymer emulsion.

Exemplary polyesters include Plascoat Z-105, Plascoat Z-730, and Plascoat Z-750 (all from GOO Chemicals).

The binders may be provided in various forms, such as dispersions or emulsions, with water typically being the major carrier liquid.

In some embodiments the binder is styrene-acrylic emulsion.

In some embodiments the ink formulation according to the present invention may further comprise at least one plasticizer.

Non limiting examples of families of plasticizing agents include urea derivatives and sorbitan derivatives. Such sorbitan derivatives may include derivatives such as sorbitan esters (such as SPAN 20, SPAN 40, SPAN 60, and SPAN 80) and polyethoxylated sorbitan esters (e.g., polyethoxylated sorbitan monoesters such as TWEEN 20, TWEEN 40, TWEEN 60, and TWEEN 80).

In some embodiments according to the present invention, the least one plasticizer is present in the water-based inkjet ink formulation according to the present invention at a concentration of between about 2.0 w/w % to about 6.0 w/w %, 2.0 w/w % and 6.0 w/w % inclusive. Any value within the above concentration range is within the scope of the present invention e.g., 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 2.8, 5.9 and 6.0 w/w %.

In some embodiments the plasticizer is TWEEN 20.

In some embodiments the ink formulation according to the present invention may further comprise at least one dispersant.

Non limiting examples of applicable dispersants are polyanionic and polymeric dispersing agents.

In some embodiments the dispersant is Dispex^{®} Ultra PX 4575.

In some embodiments according to the present invention, the least one dispersant is present in the water-based inkjet ink formulation according to the present invention at a concentration of between about 1.0 w/w % to about 2.5 w/w %, 1.0 w/w % and 2.5 w/w % inclusive. Any value within the above concentration range is within the scope of the present invention e.g., 1.0, 1.1, 1.2, 1.3, 1.4, 1.5, 1.6, 1.7, 1.8, 1.9, 2.0, 2.1, 2.2, 2.3, 2.4, and 2.5 w/w %.

In some embodiments the ink formulation according to the present invention may further comprise at least one additive.

Non limiting example of such additive is a surfactant (e.g., used to lower the surface tension of the formulations and/or to improve wetting characteristics thereof) such as siloxanes and siloxane copolymers e.g., polyether siloxane copolymers. Such surfactants are commercially available, e.g., as Tego^{®} Wet 240, Tego^{®} Wet 280, Tego^{®} Twin 4100, Byk^{®} 348 Byk^{®} 349, and Byk^{®} 3455.

A further non limiting exemplary additive is a surface energy modifier (e.g., used to reduce the surface energy of the formulation) such as silicone-based surfactants such as polysiloxane-polyoxyalkylene copolymers. Such surface energy modifiers are commercially available, e.g., as Byk^{®} 307, Byk^{®} 333, and Byk^{®} 378.

In some embodiments the additive is Tego^{®} Wet 240.

In some embodiments the additive is Byk^{®} 333.

In some embodiments according to the present invention, the least one additive e.g., surfactant, is present in the water-based inkjet ink formulation according to the present invention at a concentration of between about 1.5 w/w % to about 3.0 w/w %, 1.5 w/w % and 3.0 w/w % inclusive. Any value within the above concentration range is within the scope of the present invention e.g., 1.5, 1.6, 1.7, 1.8, 1.9, 2.0, 2.1, 2.2, 2.3, 2.4, 2.5, 2.6, 2.7, 2.8, 2.9 and 3.0 w/w %.

In some embodiments, the surfactant is a non-ionic surfactant.

In some embodiments, the surfactant is an anionic surfactant.

In some embodiments the ink formulation according to the present invention may further comprise at least one co-solvent. In some embodiments, the co-solvent is miscible with the water. In some embodiments the co-solvent is miscible with water at the at least one particular temperature in the range of 20°C to 60°C, whereby the solvent is a single-phase solvent. In some embodiments, the co-solvent is selected to provide the single-phase solvent with a reduced vapor pressure relative to water at the at least one particular temperature in the range of 20°C to 60°C. In some embodiments, the co-solvent is selected from the group consisting of ethylene glycol, diethylene glycol, propylene glycol, glycerol, PEG 400, N-methyl pyrrolidone, and mixtures thereof. In some embodiments, the co-solvent is selected from the group consisting of dipropylene glycol, tripropylene glycol methyl ether, DMSO, and mixtures thereof. In some embodiments, the co-solvent constitutes at least 5 %, at least 10 %, at least 15 %, at least 20 %, at least 25 %, at least 30 %, at least 35 %, or at least 40 % w/w of the formulation. In some embodiments, the co-solvent constitutes not more than 40 %, not more than 35 %, not more than 30%, not more than 25 %, not more than 20 %, not more than 15 %, not more than 10 %, or not more than 5 % w/w of the formulation. In some embodiments, the ratio of co-solvent to water, on a weight-weight basis, is within the range of 0.1:1 to 1:1.

In some embodiments according to the present invention, the co-solvent is present in the water-based inkjet ink formulation according to the present invention at a concentration of between about 12.0 w/w % to about 25.0 w/w %, 12.0 w/w % and 25.0 w/w % inclusive. Any value within the above concentration range is within the scope of the present invention e.g., 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, and 25.0 w/w %.

In some embodiments the co-solvent is propylene glycol.

As used herein the terms "***colorant***" and "***coloring agent***" or any lingual variations thereof are interchangeable.

In some embodiments, the colorant comprises a pigment or a mixture of pigments.

In some embodiments according to the present invention, the pigment is present in the water-based inkjet ink formulation according to the present invention at a concentration of between about 8.0 w/w % to about 18.0 w/w %, 8.0 w/w % and 18.0 w/w % inclusive. Any value within the above concentration range is within the scope of the present invention e.g., 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5 and 18.0 w/w %.

In some embodiments, the colorant constitutes at least about 1.0 % w/w of the formulation.

In some embodiments according to the present invention, the least one colorant is present in the water-based inkjet ink formulation according to the present invention at a concentration of between about 1.0 w/w % to about 5.0 w/w %, 1.0 w/w % and 5.0 w/w % inclusive. Any value within the above concentration range is within the scope of the present invention e.g., 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0 w/w %.

In some embodiments, the colorant contains less than 5% pigment.

In some embodiments according to the present invention the colorant comprises at least one white pigment.

In some embodiments the white pigment is TiO₂.

In some embodiments the at least one colorant is dispersed or at least partly dissolved in the water and the optional at least one co-solvent.

In some embodiments the various ingredients of the ink formulations according to the present invention are as herein disclosed and exemplified.

As noted above, the inventors of the present invention have found that presence of the alkali-metal organosiliconate of the present invention in the ink formulations disclosed provides a beneficial effect of suppressing one or more deterioration effects of the print heads used in the ink jetting system.

Thus, in another one of its aspects the present invention provides a water-based inkjet ink formulation of the invention, for use in preventing or minimizing print head deterioration.

In a further one of its aspects the present invention provides a method for preventing or minimizing print head deterioration, the print head being used in an inkjet printing process (and forms part of a printing system), said method comprising utilizing in the printing process the water-based inkjet ink formulation of the invention, to thereby prevent or minimize print head deterioration.

In yet another one of its aspects the present invention provides a method for preventing or minimizing print head deterioration, the print head being used in an inkjet printing process and forms part of a printing system that utilizes a water-based inkjet ink formulation comprising a solvent containing water, at least one coloring agent and optionally at least one binder, the method comprising adding to said water-based inkjet ink formulation a sufficient amount of at least one alkali-metal organosiliconate of Formula (I) 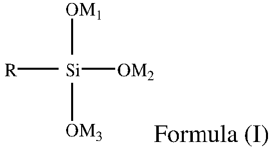 wherein:
R is C₁-C₅ alkyl group;
M₁, M₂, and M₃ are each, independently of the other, selected from hydrogen, or a cation of an alkali metal, wherein at least one of said M₁, M₂ and M₃ is a cation of an alkali metal, to thereby prevent or minimize print head deterioration.

In some embodiments of the method of the invention, the at least one alkali-metal organosiliconate is added to the ink formulation to provide a concentration thereof in said formulation of at least about 0.01 w/w %.

In some embodiments of the method of the invention, the at least one alkali-metal organosiliconate is added to the ink formulation to provide a concentration thereof in said formulation of at least about 0.05 w/w %.

In some embodiments of the method of the invention, the at least one alkali-metal organosiliconate is added to the ink formulation to provide a concentration thereof in said formulation of between about 0.01 w/w % to about 1.0 w/w %, at times of between about 0.1 w/w % to about 0.5 w/w %.

In a further one of its aspects the present invention provides a method for preventing or minimizing print head deterioration, said method comprising utilizing a water-based inkjet ink formulation, wherein said formulation comprises at least one alkali-metal organosiliconate of Formula (I) 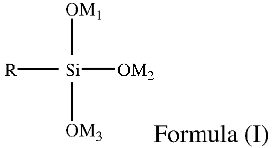 wherein:
R is C₁-C₅ alkyl group;
M₁, M₂, and M₃ are each, independently of the other, selected from hydrogen, or a cation of an alkali metal, wherein at least one of said M₁, M₂ and M₃ is a cation of an alkali metal, to thereby prevent or minimize print head deterioration, and wherein the water-based inkjet ink formulation further comprises a solvent containing water, at least one coloring agent and optionally at least one binder.

In some embodiments the print head is being used in an inkjet printing process.

In some embodiments the print head forms part of a printing system.

The various embodiments detailed herein in connection with the inkjet ink formulations of the invention are applicable *mutatis mutandis* to the methods of the invention.

In some embodiments of the invention e.g., in the methods disclosed herein, the at least one alkali-metal organosiliconate is present in the water-based inkjet ink formulation of the invention at an amount sufficient to prevent or minimize print head deterioration. In some embodiments the sufficient amount is at least about 0.01 w/w %, at times at least about 0.05 w/w %. In some embodiments the sufficient amount is between about 0.01 w/w % to about 1.0 w/w %. Any value within the above concentration range is within the scope of the present invention e.g., 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00 w/w %. In some embodiments the sufficient amount is between about 0.05 w/w % to about 1.0 w/w %, event at times of between about 0.1 w/w % to about 0.5 w/w %.

In some embodiments preventing or minimizing print head deterioration is envisaged as preventing or minimizing deterioration of at least part of the print head. e.g., nozzle plate.

In some embodiments preventing or minimizing print head deterioration is envisaged as preventing or minimizing deterioration of at least part of the print head nozzle plate.

In some embodiments according to the present invention, preventing or minimizing print head deterioration is envisaged as suppressing deterioration of print head (or at least part of the print head), at times suppressing deterioration of print head liquid repellent property.

In some embodiments according to the present invention, preventing or minimizing print head deterioration is envisaged as providing improved compatibility of the inkjet ink formulations with the print head used in the inkjet printing process.

In some embodiments according to the present invention, preventing or minimizing print head deterioration is envisaged as suppressing deterioration of print head (or at least part of the print head), at times suppressing deterioration of print head liquid repellent property (or at least part of the print head liquid repellent property) and providing improved compatibility of the inkjet ink formulations with the print head used in the inkjet printing process.

In some embodiments of the invention, print head deterioration may be erosion e.g., due to the inkjet ink.

In some embodiments of the invention, print head deterioration may be due to the basic nature of the inkjet ink. Without wishing to be bound by theory, at times, e.g., when the print head is a silicon based print head which surface thereof is coated with a liquid repellent film comprising a fluoroalkylsilane moiety, the basic inkjet ink may hydrolyze the Si-O-Si bond between the fluoroalkylsilane moiety of the liquid repellent film and the print head nozzle plate, resulting with wetting the nozzle plate (by the ink) and as such deteriorating the jetting performance of the print head. Prolonged contact between the ink and the nozzle plate (which is no longer protected, due to the hydrolysis) may even cause erosion of the nozzle plate silicon oxide.

In some embodiments of the invention, print head deterioration may be a chemical damage e.g., due to the inkjet ink and/or due to printing conditions such as pressure and/or temperature. In some embodiments the chemical damage may be due to a side reaction e.g., which forms at least one chemical that may harm the print head.

The preventing or minimizing print head deterioration effect is achieved thanks to the presence of the alkali-metal organosiliconates in the ink formulations. In some embodiments the effect may be of the alkali-metal organosiliconates alone or at times may be a result of combination of the alkali-metal organosiliconates with one or more other ingredients of the ink formulation. The effect of the combination may provide an additive effect or a synergistic effect.

The preventing or minimizing print heads deterioration according to the present invention may provide extended lifetime of the print heads (e.g., the print head nozzle plate) used in a printing process. To this end, preventing or minimizing print heads deterioration is envisaged as improving the lifetime of the print heads used in a printing process.

In some embodiments according to the present invention, the improvement of the lifetime of the print heads (e.g., print head nozzle plate) used in a printing process may be reflect by extending the lifetime of the print head by at least a factor of 10, at times by a factor of 100. For example, the lifetime of the print head/s may be extended from 1 month to 2 months or from 1 month to 5 months.

At times, ink formulations not containing the alkali-metal organosiliconate of the present invention may damage the print head in a couple of days, compared to the inks of the present invention which comprise the alkali-metal organosiliconate that may at times provide protection of the print head for a prolonged period of times such as a period of time of at least one month, at least two months, at least three months, at least four months, at least five months, at least six months, at least seven months, at least eight months or at least nine months, without showing any deterioration of the print head (e.g., print head nozzle). The protection effect may be prolonged for a period of time of one year, at times of few years. The time periods detailed herein are considered as the time periods at which the print head, e.g., print head nozzle, is in close contact with the ink formulations.

In some embodiments the protection effect may be prolonged for a period of time of 6 months.

The effect associated with the preventing or minimizing print head deterioration may be reflected in maintaining printing quality for a prolong time e.g., the printing quality may not be harmed.

It is noted that the term "***preventing or minimizing print head deterioration***" or any lingual variations thereof may be envisaged as (but not limited to) one or more of the preventing or minimizing print head deterioration detailed herein above and below.

It is noted that the term "***print head deterioration***" or any lingual variations thereof may be envisaged as (but not limited to) one or more of the print head deterioration detailed herein above and below.

As noted above, the inkjet ink formulations of the present invention may be used in a direct or an indirect printing process utilizing direct and indirect printing system, respectively.

In some embodiments the printing process is a direct printing process i.e., the ink formulation is directly jetted onto a final printed substrate.

In some embodiments the printing process is an indirect printing process in which a release surface of an intermediate transfer member (ITM) is pre-treated (e.g., coated) with a treatment formulation (e.g., an aqueous treatment formulation) before deposition of an ink image thereto. The treatment formulation is applied to a surface of an ITM to form thereon a thin wet treatment layer which is subjected to a drying process on the ITM release surface to leave a thin substantially dried treatment film on the ITM release surface. Then after, droplets of the aqueous ink formulation are deposited by ink-jetting onto the thin substantially dried treatment film to form an ink image thereon. The formed ink-image is then subjected to a drying process to leave an ink residue on the substantially dried treatment film. The substantially dried ink-image is then transferred, together with the thin substantially dried treatment film, from the ITM surface to a final printed substrate (e.g. foil-based, paper-based or plastic-based).

Examples of such printing processes and systems are disclosed in the patent publications to the Applicant WO 2017/208152 (PCT/IB2017/053177) **[8]** and WO 2013/132418 (PCT/IB2013/051716) **[9].**

Briefly, **Figure 1** provides an illustration of an exemplary indirect printing system. Specifically, **Figure 1** is a schematic side view of a digital printing system **10,** in accordance with some embodiments of the invention. In some embodiments, system **10** comprises a rolling flexible blanket **12** that cycles through an image forming station **14,** a drying station **16,** an impression station **18** and a blanket treatment station **20.**

As used herein the term "***blanket***" refers to a flexible transfer member that can be mounted within a printing device to form a belt-like structure on two or more rollers, at least one of which is able to rotate and move the blanket (e.g. by moving the belt thereof) to travel around the rollers.

As used herein, the terms "***blanket***" and "***intermediate transfer member***" (ITM) are used interchangeably and refer to a flexible member comprising at least a release layer used as an intermediate member configured to receive an ink image and to transfer the ink image to a target substrate.

In an operative mode, image forming station **14** is configured to form a mirror ink image, also referred to herein as "***an ink image***" (not shown), of a digital image on an upper run of a surface of blanket **12.** Subsequently the ink image is transferred to a target substrate, (e.g., a paper, a folding carton, or any suitable flexible package in a form of sheets or continuous web) located under a lower run of blanket **12.**

As used herein, the terms "***ink image***" and "***image***" are interchangeable. At times, said terms refer to an image formed on blanket **12** and transferred to a target substrate. At times they refer to the printed image on the substrate itself (e.g., a paper, a folding carton, or any suitable flexible package in a form of sheets or continuous web). Thus, these terms should be interpreted in the context of the text in which they are used.

As used herein, the term "***run***" refers to a length or segment of blanket **12** between any two given rollers over which blanket **12** is guided.

In some embodiments, during installation blanket **12** may be adhered (e.g., seamed) edge to edge to form a continuous blanket loop (not shown). An example of a method and a system for the installation of the seam is described in detail in the patent publication to the Applicant WO 2019/012456 (PCT/IB2018/055126) **[10].**

In some embodiments, image forming station **14** typically comprises multiple print bars **22,** each mounted (e.g., using a slider) on a frame (not shown) positioned at a fixed height above the surface of the upper run of blanket **12.** In some embodiments, each print bar **22** comprises a strip of print heads as wide as the printing area on blanket **12** and comprises individually controllable print nozzles.

In some embodiments, image forming station **14** may comprise any suitable number of bars **22,** each bar **22** may contain a printing fluid, such as an aqueous ink formulation of a different color. The ink typically has visible colors, such as but not limited to cyan, magenta, red, green, blue, yellow, black and white. In the example of **Figure 1,** image forming station **14** comprises seven print bars **22,** but may comprise, for example, four print bars **22** having any selected colors such as cyan, magenta, yellow and black.

In some embodiments, one or more of the print bars may comprise the water-based inkjet ink formulation of the invention i.e., comprising the alkali-metal organosiliconate of the invention. At times, all of the print bars utilized in the printing method/system may comprise the water-based inkjet ink formulation of the invention i.e., comprising the alkali-metal organosiliconate of the invention. At times, only the print bar/s comprising white color may comprise the water-based inkjet ink formulation of the invention i.e., comprising the alkali-metal organosiliconate of the invention.

In some embodiments, the print heads are configured to jet ink droplets of the different colors onto the surface of blanket **12** so as to form the ink image (not shown) on the surface of blanket **12.**

In some embodiments, different print bars **22** are spaced from one another along the movement axis of blanket **12,** represented by an arrow **24.** In this configuration, accurate spacing between bars **22,** and synchronization between directing the droplets of the ink of each bar **22** and moving blanket **12** are essential for enabling correct placement of the image pattern.

In some embodiments, system **10** comprises heaters, such as hot gas or air blowers **26,** which are positioned in between print bars **22,** and are configured to partially dry the ink droplets deposited on the surface of blanket **12.**

This hot air flow between the print bars may assist, for example, in reducing condensation at the surface of the print heads and/or in handling satellites (e.g., residues or small droplets distributed around the main ink droplet), and/or in preventing blockage of the inkjet nozzles of the print heads, and/or in preventing the droplets of different color inks on blanket **12** from undesirably merging into one another. In some embodiments, system **10** comprises a drying station **16,** configured to blow hot air (or another gas) onto the surface of blanket **12.** In some embodiments, drying station comprises air blowers or any other suitable drying apparatus.

In drying station **16,** the ink image formed on blanket **12** is exposed to radiation and/or to hot air in order to dry the ink more thoroughly, evaporating most or all of the liquid carrier and leaving behind only a layer of resin and coloring agent which is heated to the point of being rendered tacky ink film.

In some embodiments, system **10** comprises a blanket transportation assembly **26',** configured to move a rolling ITM, such as a blanket **12.** In some embodiments, blanket transportation/guiding assembly **26'** comprises one or more rollers **28,** wherein at least one of rollers **28** comprises an encoder (not shown), which is configured to record the position of blanket **12,** so as to control the position of a section of blanket **12** relative to a respective print bar **22.** In some embodiments, the encoder of roller **28** typically comprises a rotary encoder configured to produce rotary-based position signals indicative of an angular displacement of the respective roller.

Additionally or alternatively, blanket **12** may comprise an integrated encoder (not shown) for controlling the operation of various modules of system **10.** The integrated encoder is described in detail, for example, in the patent publication to the Applicant WO 2020/003088 (PCT/IB2019/055288) **[11].**

In some embodiments, system **10** comprises an impression station **18,** wherein blanket **12** passes between an impression cylinder **30** and a pressure cylinder **32,** which is configured to carry a compressible blanket.

In some embodiments, system **10** comprises a control console (not shown), which is configured to control multiple modules and assemblies of system **10.**

In some embodiments, blanket treatment station **20,** which can also serve as a cooling and/or cleaning station, is configured to treat the blanket by, for example, cooling it and/or applying a treatment fluid to the outer surface of blanket **12,** and/or cleaning the outer surface of blanket **12.** The treatment may be carried out by passing blanket **12** over one or more rollers or blades configured for applying cooling and/or cleaning and/or treatment fluid on the outer surface of the blanket.

In the example of **Figure 1,** station **20** is mounted between two specific rollers **28,** yet, station **20** may be mounted adjacent to blanket **12** at any other suitable location between impression station **18** and image forming station **14.**

In some embodiments, impression cylinder **30** of impression station **18,** is configured to impress the ink image onto the target substrate, such as an individual sheet **34,** conveyed by substrate transport module **36** (schematically shown) from an input stack **38** to an output stack **40** via impression cylinder **30.** In some embodiments, the target substrate may comprise any suitable substrate, such as but not limited to a flexible substrate, a partially flexible substrate (e.g., having flexible sections and rigid sections), or a rigid substrate.

In some embodiments, system **10** comprises an additional impression station (not shown), so as to permit duplex printing (i.e., printing on both sides of sheet **34**).

In alternative embodiments, a different configuration of substrate conveyor **36** may be used for printing on a continuous web substrate, as disclosed for example in PCT International Publication WO 2020/136517 (PCT/IB2019/061081) **[14].** Detailed descriptions and various configurations of sheet-fed simplex and duplex printing systems and of systems for printing on continuous web substrates are provided, for example, in PCT International Publications WO 2013/132420 (PCT/IB2013/051718) **[12]** and in PCT International Publication WO 2015/036906 (PCT/IB2014/064277) **[13].**

The particular configurations of system **10** are shown by way of example. Embodiments of the present invention, however, are by no means limited to this specific sort of example system, and the principles described herein may similarly be applied to any other sorts of printing systems.

Thus, in another one of its aspects, the present invention provides an indirect printing system and an indirect printing process e.g., as described in **[8]** and/or **[9],** utilizing the inkjet ink formulations of the present invention.

In a further one of its aspects the present invention provides a printing system comprising an image forming station comprising one or more print bars, each of which is configured to hold an ink formulation and comprises one or more print heads, each of said one or more print heads is configured to jet said ink formulation onto a printing substrate to form ink images on said substrate, wherein at least one of said one or more print bars is configured to hold the water-based inkjet ink formulation according to the present invention.

In some embodiments the printing substrate is substantially as disclosed herein.

In some embodiments the one or more print heads are substantially as disclosed herein.

Yet, in a further one of its aspects the present invention provides a printing system comprising:
an intermediate transfer member comprising a release layer surface;
an image forming station comprising one or more print bars, each of which is configured to hold an ink formulation and comprises one or more print heads, each of said one or more print heads is configured to jet said ink formulation onto said release layer surface to form ink images thereon, wherein at least one of said one or more print bars is configured to hold the water-based inkjet ink formulation according to the present invention; and
a transfer station for transferring the ink images from the intermediate transfer member to a printing substrate.

In some embodiments the system of the invention may further comprises a drying station configured to substantially dry (at times partly dry) the ink images formed on the intermediate transfer member, and wherein the transfer station is configured to transfer the substantially dry (at times partly dry) ink image from the intermediate transfer member to a printing substrate.

As used herein above and below, the term "***substantially dry***" or any lingual variations thereof may be envisaged as partly dry, at times as dry to an extent that solvent/s and/or co-solvent/s and/or water and/or any volatile ingredient/s are present at traces amounts (e.g., that are not interfering with the performance of one or more of the system, the printing process and the printing quality), or event at times as completely dry.

In some embodiments the intermediate transfer member is substantially as disclosed herein.

In some embodiments the one or more print heads are substantially as disclosed herein.

In some embodiments the transfer station is substantially as disclosed herein.

In some embodiments the drying station is substantially as disclosed herein.

In some embodiments the printing substrate is substantially as disclosed herein.

In another one of its aspects, the present invention provides a water-based inkjet ink formulation as herein disclosed, for use in preventing or minimizing print head/s deterioration, the print head/s are used in a printing process which may be direct or indirect. The utilized printing systems may be either direct or indirect systems.

In some embodiments the print head of the present invention form part of a direct printing system.

In some embodiments the print head of the present invention is an inkjet print head.

In some embodiments the print head of the present invention forms part of an indirect or direct printing system.

In some embodiments the print head of the present invention comprises a print head nozzle plate.

In some embodiments at least part of the print head of the present invention is formed of metal oxide e.g., silicon oxide.

In some embodiments the metal oxide is at least one selected from silicon oxide, titanium oxide and chromium oxide.

In some embodiment the metal nitride is at least one selected from the group consisting of titanium nitride and silicon nitride.

In some embodiment at least part of the nozzle plate is coated with a film which comprises SiO₂ or tantalum oxide.

In some embodiments at least part of the print head of the present invention is formed of silicon e.g., silicon oxide.

In some embodiments the whole printing head nozzle is formed of silicon e.g., silicon oxide.

In some embodiments the silicon is single crystal silicon.

In some embodiments the silicon is a polysilicon.

In some embodiments the print head (at least part or whole) of the present invention is formed of silicon coated with a liquid repellent film comprising a fluoroalkylsilane moiety.

In some embodiments of the present invention the liquid repellent film is a monolayer film.

In some embodiments the print head of the present invention is formed of silicon coated with thermally grown silicon oxide SiOₓ e.g., SiO₂.

In some embodiments the print head of the present invention (at least part or whole) is formed of silicon coated with thermally grown silicon oxide SiOₓ e.g., SiO₂ (which may be in the form of a film) further coated with a liquid repellent film comprising a fluoroalkylsilane moiety.

In some embodiments the print head of the present invention comprises a nozzle plate which is selected from the group consisting of: (i) a silicon plate having a thermal oxidation SiO₂layer, and (ii) a self-assembled monolayer film plate in which a fluorinated alkyl silane compound is formed on an oxidation SiO₂ layer provided on a silicon plate.

In some embodiments the liquid repellent film containing fluoroalkylsilane moiety is formed by using a compound represented by the formula CₙF₂ₙ₊₁-CₘH₂ₘ-Si-X₃ wherein n represents an integer of 1 or more; m represents an integer of 0 or more; X represents an alkoxy group, an amino group, or a halogen atom; and a part of X may be substituted with an alkyl group.

In some embodiments of the present invention the compound of the formula CₙF₂ₙ₊₁-CₘH₂ₘ-Si-X₃ is C₈F₁₇C₂H₄SiCl₃.

In some embodiments of the present invention the liquid repellent film containing fluoroalkylsilane moiety is provided in a form of a monolayer protecting the Si and SiOx layers.

In some embodiments of the present invention the liquid repellent film is provided on the surface of the inkjet print head nozzle, particularly on the surface thereof at a side toward the ink ejection direction of the nozzle.

In some embodiments of the present invention the inkjet ink formulation is ejected from a recording head having a plating layer containing a fluorine-based polymer on the surface of the nozzle plate.

The printing heads of the present invention, e.g., printing head plates, are available for example from Dimatix, FUJIFILM Corporation, Tokyo, Japan. Such print heads are disclosed in [1]-[5].

It is noted that the term "***print head***" may be envisaged as (but not limited to) one or more of the print heads detailed herein above and below.

### DETAILED DESCRIPTION OF EMBODIMENTS

The following example is not in any way intended to limit the scope of the invention as claimed.

### Example 1: Testing compatibility of ink formulations and print head (nozzle plate)

Damaged nozzle plate effects on jetting stability and print quality were tested.

To predict the nozzle plate durability, immersion test was applied.

A silicon made coupon purchased from Dimatix that simulates the nozzle plate was immersed in the tested ink formulation in a way that half coupon was in the testing liquid and the other part was not covered, and stored at 50°C for a period of time of max 9 months. Testing at 50°C was performed to enhance the process and to stimulate the lifetime of the print head according to the manufacturer.

Contact angle (CA) was measured periodically and scanning electron microscope (SEM) was used to explore the effect of the ink formulations on the coupon.

**Table 1** details the content of the tested ink formulations comprising the white pigment Titanium Dioxide TiO₂ (Rutile).

The ink formulations were prepared by mixing the various ingredients as the specified content.

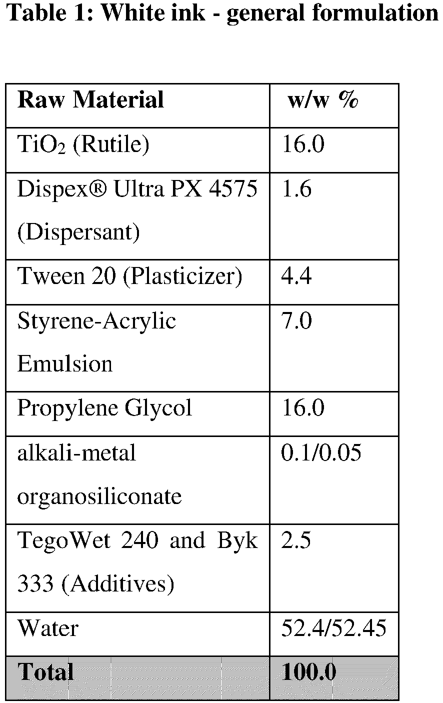

The following various alkali-metal organosiliconate materials were used:
- SILRES BS 16 - Wacker Silicones
- XIAMETER OFS-0777 Siliconate - Dow Chemical
- POTASSIUM METHYLSILICONATE, 40% in water - Gelest
- SODIUM METHYLSILICONATE, 30% in water - Gelest

The following sodium silicate materials were used:
- Sodium silicate solution - Sigma Aldrich.
- Sodium metasilicate pentahydrate - Sigma Aldrich.

Two types of the TiO₂ pigments were used. All TiO₂ grades were rutile.
**Table 2** details TiO₂ pigment in Chloride Process.
**Table 3** details TiO₂ pigment in Sulphate Process.

**Table 2: TiO₂ in Chloride Process**

| **Name** | **Surface Treatment** |
|---|---|
| Kronos 2160 | Al, Si |
| Kronos 2300 | Al |
| Kronos 2310 | Al, Si, Zr |
| Tioxide R-XL | Al, Si |

**Table 3: TiO₂ in Sulphate Process**

| **Name** | **Surface Treatment** |
|---|---|
| RDI-S | Al, Organic |
| RDDI | Al, Si, Organic |

All of the tested ink formulations with the TiO₂ white pigment damaged the nozzle plate in the absence of organic silicate. In the presence of the alkali-metal organosiliconate in the ink formulations at a concentration of 0.1% no damage to the nozzle plate was observed.

**Fig. 2** displays a SEM image, top view, of a coupon (**100**) at a contact angle of 110-117°.

**Fig. 3** is a schematic illustration of a side view of a coupon (**200**) which has a layer of Si (**202**) on top of which there is a layer of thermally grown silicon oxide SiOₓ (**204**) and a liquid repellent film (**206**) comprising a fluoroalkylsilane moiety. The liquid repellent film is a monolayer chemically attached to the SiO2 surface. **Fig. 3** further illustrates contact angles of 0.5 µl drop of DIW (Di-Ionized Water) (**208**, contact angle = 110°-117°).

**Figs. 4A-4G** display a SEM image, top view, of a coupon simulating a nozzle plate, treated with inkjet ink formulations comprising a White colorant.

**Figs.4A** and **4B** represent a coupon treated with an inkjet ink formulation with no alkali-metal organosiliconate or Sodium Silicate (White Ref.) for 7 days at 50°C. **Fig.4A** is provided at a magnification of x50 and Fig. **4B** is provided at a magnification of x 200.

**Fig. 4C** represents a coupon treated with an inkjet ink formulation with added 0.1% alkali-metal organosiliconate for 2 months at 50°C.

**Fig. 4D -** represents a coupon treated with an inkjet ink formulation with added 0.1% alkali-metal organosiliconate for 9 months at 50°C.

**Fig. 4E** - represents a coupon treated with an inkjet ink formulation with added 0.05% alkali-metal organosiliconate for 1 month at 50°C (similar results were obtained with 0.01% alkali-metal organosiliconate - data not shown).

**Figs. 4F** and **4G** represent a coupon treated with an inkjet ink formulation with added 0.5% Sodium Silicate for 15 days at 50°C (similar results were obtained with 0.1% and 0.3% Sodium Silicate for 10 days at 50°C, with 101° contact angle - data not shown). **Fig.4F** is provided at a magnification of x50 and Fig. **4G** is provided at a magnification of x 200.

**Figs. 5A-5C** display a SEM image, top view, of a coupon simulating a nozzle plate, treated with inkjet ink formulations comprising a Magenta colorant.

**Fig.5A** represents a coupon treated with an inkjet ink formulation with no alkali-metal organosiliconate or Sodium Silicate (Magenta Ref.) for 3 days at 50°C.

**Fig. 5B** represents a coupon treated with an inkjet ink formulation with added 0.5% alkali-metal organosiliconat for 8 months at 50°C.

**Fig. 5C** represents a coupon treated with an inkjet ink formulation with added 0.5% Sodium Silicate for 8 months at 50°C.

**Table 4** below summarizes the tested results.

**Table 4: Summary of the results**

| | **Sample** | **Immersion Time (at 50°C)** | **Contact Angle [°]** | **SEM** |
|---|---|---|---|---|
| **Ref** | **Figure 2:** | 0 | 110-117 | |
| | Coupon | | | |
| | **Figures 4A and 4B:** | 7 days | 105 | Many pinholes |
| | White Ref. | | | |
| | **Figure 4C:** | 2 months | 108 | No damage |
| **White Ink** | White+0.1% alkali-metal organosiliconate | | | |
| | **Figure 4D:** | 9 months | 109 | No damage |
| | White+0.1% alkali-metal organosiliconate | | | |
| | **Figure 4E:** | 1 month | 102 | Many small pinholes |
| | White+0.05% alkali-metal organosiliconate | | | |
| | **Figures 4F and 4G** | 15 days | 105 | Many small pinholes |
| | White+0.5% sodium silicate | | | |
| **Colored Ink** | **Figure 5A:** | 3 days | 76 | Significant damage in non-wetting coating |
| | Magenta Ref. | | | |
| | **Figure 5B:** | 8 months | 109 | No damage |
| | Magenta+0.5% alkali-metal organosiliconate | | | |
| | **Figure 5C:** | 8 months | 107 | No damage |
| | Magenta+0.5% sodium silicate | | | |

## Claims

1. A water-based inkjet ink formulation comprising:
(a) a solvent containing water;
(b) at least one coloring agent;
(c) at least one alkali-metal organosiliconate of Formula (I) 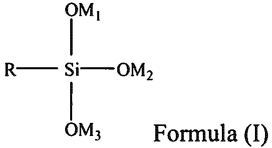 wherein:
R is C₁-C₅ alkyl group which may be substituted;
M₁, M₂, and M₃ are each, independently of the other, selected from hydrogen or a cation of an alkali metal, wherein at least one of said M₁, M₂ and M₃ is a cation of an alkali metal; and
(d) optionally at least one binder.

2. The inkjet ink formulation of Claim 1, wherein R is selected from methyl, ethyl, propyl or isopropyl.

3. The inkjet ink formulation of Claim 1 or 2, wherein two of said M₁, M₂, and M₃ are hydrogen and the third is a cation of an alkali metal.

4. The inkjet ink formulation of any one of Claims 1 to 3, wherein R is methyl and wherein said at least one alkali-metal organosiliconate is selected from the group consisting of:

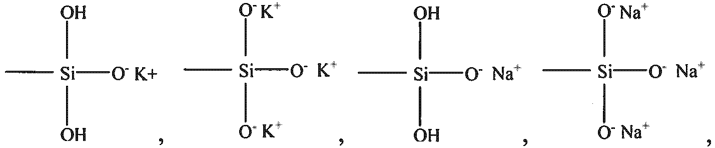

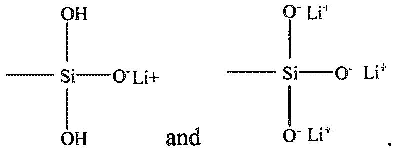

5. The inkjet ink formulation of any one of Claims 1 to 4, wherein said formulation is devoid of one or more inorganic silicate/s and/or of colloidal silica.

6. The inkjet ink formulation of any one of Claims 1 to 5, wherein said coloring agent comprises at least one white pigment.

7. A method for preventing or minimizing print head deterioration, said method comprising utilizing a water-based inkjet ink formulation, wherein said formulation comprises at least one alkali-metal organosiliconate of Formula (I) 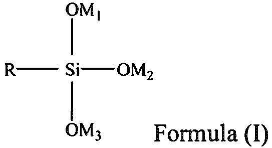 wherein:
R is C₁-C₅ alkyl group which may be substituted;
M₁, M₂, and M₃ are each, independently of the other, selected from hydrogen or a cation of an alkali metal, wherein at least one of said M₁, M₂ and M₃ is a cation of an alkali metal;
to thereby prevent or minimize print head deterioration,
and wherein said water-based inkjet ink formulation further comprises a solvent containing water, at least one coloring agent, and optionally at least one binder.

8. The method of Claim 7, wherein R is selected from methyl, ethyl, propyl or isopropyl.

9. The method of any Claim 7 or 8, wherein two of said M₁, M₂, and M₃ are hydrogen and the third is a cation of an alkali metal.

10. The method of any one of Claims 7 to 9, wherein R is methyl and wherein said at least one alkali-metal organosiliconate is selected from the group consisting of:

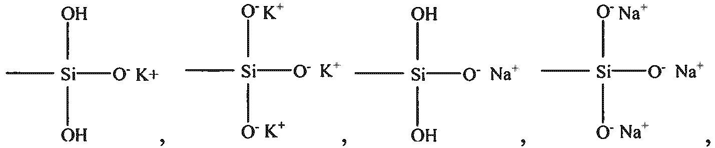

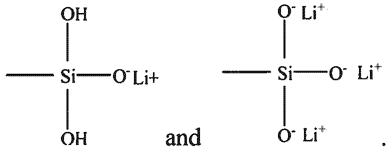

11. The method of any one of Claims 7 to 10, wherein said formulation is devoid of one or more inorganic silicate/s and/or of colloidal silica.

12. The method of any one of Claims 7 to 11, wherein said coloring agent comprises at least one white pigment.

13. The method of any one of Claims 7 to 12, wherein said preventing or minimizing print head deterioration is suppressing deterioration of the print head, in particular suppressing deterioration of the print head liquid repellent property.

14. The method of any one of Claims 7 to 13, wherein said print head forms part of a printing system which may be a direct or an indirect printing system.

15. The method of any one of Claims 7 to 14, wherein at least part of the print head is formed of metal oxide, in particular silicon oxide, more particular, a thermally grown silicon oxide being coated with a liquid repellent film comprising a fluoroalkylsilane moiety, and wherein said liquid repellent film is provided on the surface of an inkjet print head nozzle at a side toward the ink ejection direction of the nozzle.

16. A printing method utilizing the water-based inkjet ink formulation according to any one of Claims 1 to 6.

17. A printing system comprising the water-based inkjet ink formulation according to any one of Claims 1 to 6.

## Patentansprüche

1. Wasserbasierte Tintenstrahltintenformulierung, umfassend:
(a) ein Lösungsmittel, das Wasser enthält;
(b) mindestens ein Färbemittel;
(c) mindestens ein Alkalimetallorganosiliconat von Formel (I) 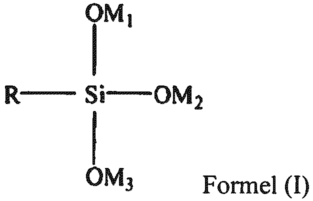 wobei:
R eine C₁-C₅-Alkylgruppe ist, die substituiert sein kann;
M₁, M₂ und M₃ jeweils unabhängig voneinander aus Wasserstoff oder einem Kation eines Alkalimetalls ausgewählt sind, wobei mindestens eines der M₁, M₂ und M₃ ein Kation eines Alkalimetalls ist; und
(d) gegebenenfalls mindestens ein Bindemittel.

2. Tintenstrahltintenformulierung nach Anspruch 1, wobei R aus Methyl, Ethyl, Propyl oder Isopropyl ausgewählt ist.

3. Tintenstrahltintenformulierung nach Anspruch 1 oder 2, wobei zwei der M₁, M₂ und M₃ Wasserstoff sind und das dritte ein Kation eines Alkalimetalls ist.

4. Tintenstrahltintenformulierung nach einem der Ansprüche 1 bis 3, wobei R Methyl ist und wobei das mindestens eine Alkalimetallorganosiliconat ausgewählt ist aus der Gruppe gebildet aus:

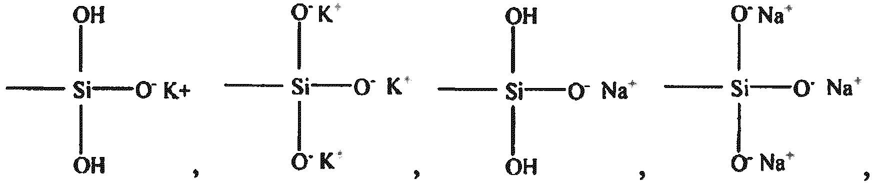

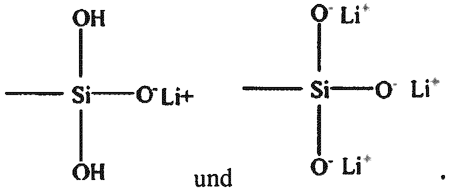

5. Tintenstrahltintenformulierung nach einem der Ansprüche 1 bis 4, wobei die Formulierung frei von einem oder mehreren anorganischen Silikat / Silikaten und / oder kolloidalem Siliciumdioxid ist.

6. Tintenstrahltintenformulierung nach einem der Ansprüche 1 bis 5, wobei das Färbemittel mindestens ein weißes Pigment umfasst.

7. Verfahren zum Verhindern oder Minimieren von Druckkopfschädigung, wobei das Verfahren Verwendung einer wasserbasierten Tintenstrahltintenformulierung umfasst, wobei die Formulierung mindestens ein Alkalimetallorganosiliconat der Formel (I) umfasst 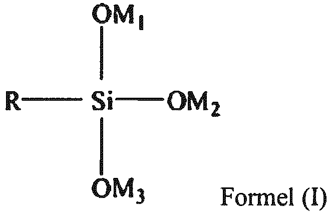 wobei:
R eine C₁-C₅-Alkylgruppe ist, die substituiert sein kann;
M₁, M₂ und M₃ jeweils unabhängig voneinander aus Wasserstoff oder einem Kation eines Alkalimetalls ausgewählt sind, wobei mindestens eines der M₁, M₂ und M₃ ein Kation eines Alkalimetalls ist;
um dadurch Druckkopfschädigung zu verhindern oder zu minimieren,
und wobei die wasserbasierte Tintenstrahltintenformulierung ferner ein Lösungsmittel umfasst, das enthält Wasser, mindestens ein Färbemittel und gegebenenfalls mindestens ein Bindemittel.

8. Verfahren nach Anspruch 7, wobei R ausgewählt ist aus Methyl, Ethyl, Propyl oder Isopropyl.

9. Verfahren nach einem der Ansprüche 7 oder 8, wobei zwei der M₁, M₂ und M₃ Wasserstoff sind und das dritte ein Kation eines Alkalimetalls ist.

10. Verfahren nach einem der Ansprüche 7 bis 9, wobei R Methyl ist und wobei das mindestens eine Alkalimetallorganosiliconat ausgewählt ist aus der Gruppe gebildet aus:

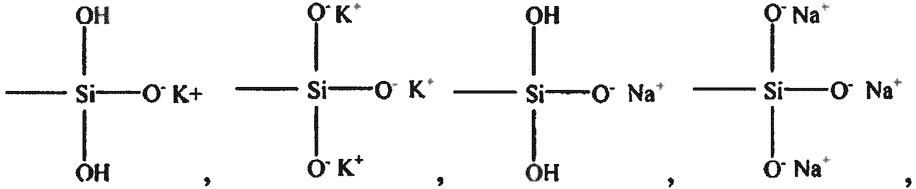

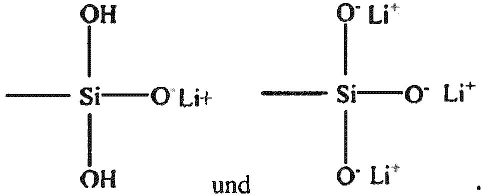

11. Verfahren nach einem der Ansprüche 7 bis 10, wobei die Formulierung frei von einem oder mehreren anorganischen Silikat / Silikaten und / oder kolloidalem Siliciumdioxid ist.

12. Verfahren nach einem der Ansprüche 7 bis 11, wobei das Färbemittel mindestens ein weißes Pigment umfasst.

13. Verfahren nach einem der Ansprüche 7 bis 12, wobei das Verhindern oder Minimieren von Druckkopfschädigung Unterdrücken von Druckkopfschädigung ist, bevorzugt Unterdrücken von Schädigung der flüssigkeitsabweisenden Eigenschaft des Druckkopfs.

14. Verfahren nach einem der Ansprüche 7 bis 13, wobei der Druckkopf Teil eines Drucksystems ist, das ein direktes oder ein indirektes Drucksystem sein kann.

15. Verfahren nach einem der Ansprüche 7 bis 14, wobei mindestens ein Teil des Druckkopfs aus Metalloxid, bevorzugt aus Siliziumoxid, besonders bevorzugt aus thermisch gewachsenem Siliziumoxid, gebildet ist, das mit einem flüssigkeitsabweisenden Film beschichtet ist, der einen Fluoralkylsilan-Rest umfasst, und wobei der flüssigkeitsabweisende Film auf der Oberfläche einer Tintenstrahldruckkopfdüse an einer Seite in Richtung der Tintenausstoßrichtung der Düse bereitgestellt ist.

16. Druckverfahren unter Verwendung der wasserbasierten Tintenstrahltintenformulierung nach einem der Ansprüche 1 bis 6.

17. Drucksystem, umfassend die wasserbasierte Tintenstrahltintenformulierung nach einem der Ansprüche 1 bis 6.

## Revendications

1. Une composition d'encre à base d'eau pour jet d'encre, comprenant :
(a) un solvant contenant de l'eau ;
(b) au moins un agent colorant ;
(c) au moins un organosiliconate de métal alcalin de Formule (I) 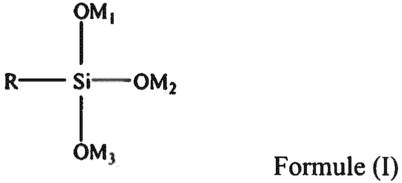 dans laquelle :
R est un groupe alkyle en C₁ à C₅ qui peut être substitué ;
M₁, M₂ et M₃ sont chacun, indépendamment les uns des autres, choisis parmi l'hydrogène ou un cation d'un métal alcalin, au moins l'un desdits M₁, M₂ et M₃ étant un cation d'un métal alcalin ; et
(d) optionnellement au moins un liant.

2. La formulation d'encre pour jet d'encre selon la revendication 1, dans laquelle R est choisi parmi les groupes méthyle, éthyle, propyle ou isopropyle.

3. La formulation d'encre pour jet d'encre selon la revendication 1 ou la revendication 2, dans laquelle deux desdits M₁, M₂ et M₃ sont l'hydrogène et le troisième est un cation d'un métal alcalin.

4. La formulation d'encre pour jet d'encre selon l'une quelconque des revendications 1 à 3, dans laquelle R est un groupe méthyle et dans laquelle ledit au moins un organosiliconate de métal alcalin est choisi dans le groupe constitué par :

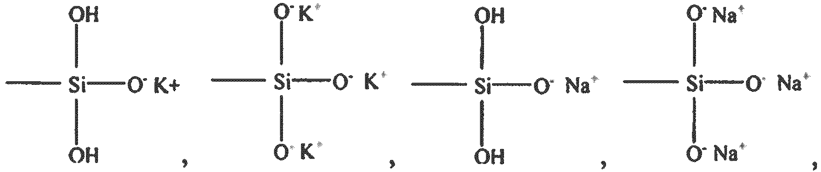

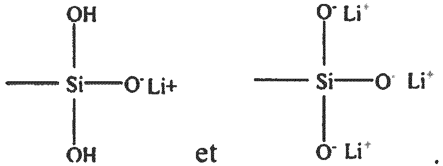

5. La formulation d'encre pour jet d'encre selon l'une quelconque des revendications 1 à 4, dans laquelle ladite formulation est dépourvue d'un ou plusieurs silicates inorganiques et/ou de silice colloïdale.

6. La formulation d'encre pour jet d'encre selon l'une quelconque des revendications 1 à 5, dans laquelle ledit agent colorant comprend au moins un pigment blanc.

7. Un procédé pour empêcher ou minimiser la détérioration d'une tête d'impression, ledit procédé comprenant le fait d'utiliser une formulation d'encre à base d'eau pour jet d'encre, ladite formulation comprenant au moins un organosiliconate de métal alcalin de formule (I) 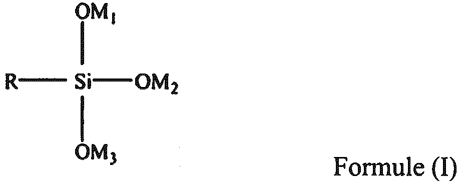 dans laquelle :
R est un groupe alkyle en C₁-C₅ qui peut être substitué ;
M₁, M₂ et M₃ sont chacun, indépendamment les uns des autres, choisis parmi l'hydrogène ou un cation d'un métal alcalin, au moins l'un desdits M₁, M₂ et M₃ étant un cation d'un métal alcalin ;
afin de prévenir ou de minimiser ainsi la détérioration d'une tête d'impression,
et ladite formulation d'encre pour jet d'encre à base d'eau comprenant en outre un solvant contenant de l'eau, au moins un agent colorant et, optionnellement, au moins un liant.

8. Le procédé selon la revendication 7, dans lequel R est choisi parmi le méthyle, l'éthyle, le propyle ou l'isopropyle.

9. Le procédé selon l'une quelconque des revendications 7 ou 8, dans lequel deux desdits M₁, M₂ et M₃ sont de l'hydrogène et le troisième est un cation d'un métal alcalin.

10. Le procédé selon l'une quelconque des revendications 7 à 9, dans lequel R est un groupe méthyle et dans lequel ledit au moins un organosiliconate de métal alcalin est choisi dans le groupe constitué par :

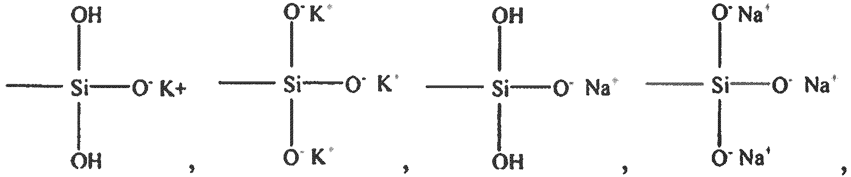

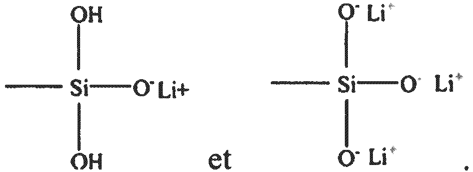

11. Le procédé selon l'une quelconque des revendications 7 à 10, dans lequel ladite formulation est dépourvue d'un ou plusieurs silicates inorganiques et/ou de silice colloïdale.

12. Le procédé selon l'une quelconque des revendications 7 à 11, dans lequel ledit agent colorant comprend au moins un pigment blanc.

13. Le procédé selon l'une quelconque des revendications 7 à 12, dans lequel ladite prévention ou minimisation de la détérioration d'e la tête d'impression consiste à supprimer la détérioration de la tête d'impression, en particulier à supprimer la détérioration de la propriété hydrofuge de la tête d'impression.

14. Le procédé selon l'une quelconque des revendications 7 à 13, dans lequel ladite tête d'impression fait partie d'un système d'impression qui peut être un système d'impression directe ou indirecte.

15. Le procédé selon l'une quelconque des revendications 7 à 14, dans lequel au moins une partie de la tête d'impression est formée d'oxyde métallique, en particulier d'oxyde de silicium, plus particulièrement d'oxyde de silicium thermo-cristallisé, recouvert d'un film hydrofuge comprenant un groupe fluoroalkylsilane, et dans lequel ledit film hydrofuge est prévu sur la surface d'une buse de tête d'impression à jet d'encre, sur un côté tourné vers la direction d'éjection d'encre de la buse.

16. Un procédé d'impression utilisant la formulation d'encre à base d'eau pour jet d'encre selon l'une quelconque des revendications 1 à 6.

17. Un système d'impression comprenant la formulation d'encre à base d'eau pour jet d'encre selon l'une quelconque des revendications 1 à 6.
